# EUROPÄISCHE PATENTSCHRIFT

(11) **EP 1 330 610 B1**
(45) Veröffentlichungstag und Bekanntmachung des Hinweises auf die Patenterteilung: **15.06.2005**
(21) Anmeldenummer: 01992836.5
(22) Anmeldetag: 17.10.2001
(51) Int. Cl.: F15B 21/08

(54) **VENTILGESTEUERTE FLUIDISCHE AKTORANORDNUNG**
VALVE-CONTROLLED FLUIDIC ACTUATOR SYSTEM
DISPOSITIF D'ACTIONNEMENT FLUIDIQUE COMMANDE PAR SOUPAPE

(30) Priorität: 31.10.2000 DE 10054561
(43) Veröffentlichungstag der Anmeldung: 30.07.2003
(73) Patentinhaber: Festo AG & Co, 73734 Esslingen (DE)
(72) Erfinder: FRISCH, Herbert, 73035 Göppingen (DE); BECK, Wilfried, 65191 Wiesbaden (DE)
(74) Vertreter: Vetter, Hans, Dipl.-Phys. Dr.
(86) Internationale Anmeldenummer: PCT/EP2001/012012
(87) Internationale Veröffentlichungsnummer: WO 2002/036966

(56) Entgegenhaltungen:
- EP-A- 0 803 653
- FR-A- 2 546 577
- US-A- 2 152 537
- US-A- 4 473 923
- US-A- 4 675 780
- US-A- 5 658 159
- US-A- 6 101 920

## Beschreibung

Die Erfindung betrifft eine ventilgesteuerte fludische Aktoranordnung mit den Merkmalen des Oberbegriffs des Anspruchs 1.

Aus der EP-A-0 803 653 ist eine derartige Anordnung bekannt, bei der die Übertragung des Arbeitsdrucks und der Sensorsignale von Positionssensoren an Arbeitszylindern über elektropneumatische Kunststoffleitungen erfolgt. Dabei sind die elektropneumatischen Kunststoffleitungen über Anschlussstücke mit Ventilanordnungen verbunden, die an den Arbeitszylindern angebracht sind. Die Positionssensoren sind über elektrische Leitungen mit den Ventilanordnungen verbunden. Die Anschlussstücke sind in die Ventile eingesteckt und mittels Halteschrauben fixiert. Infolge der elektrischen Leitungsstränge in den Kunststoffleitungen ist ein Einschrauben der Anschlussstücke nicht möglich. Darüber hinaus werden die Ventile als Verbindungsstücke zwischen den Sensorleitungen und den Leitungssträngen in den Kunststoffleitungen benötigt.

Aus der US-A-4 675 780 sind zwar Kunststoffleitungen mit in der Wandung integrierten elektrischen Leitungen bekannt, jedoch sind diese alle am Anschlussstück kurz geschlossen und daher nicht zur Übertragung von Sensorsignalen geeignet.

Eine Aufgabe der vorliegenden Erfindung besteht darin, eine ventilgesteuerte, fluidische Aktoranordnung zu schaffen, bei der die Ventilanordnung räumlich getrennt von der Aktoranordnung positioniert ist, und bei der die Kunststoffleitungen zwischen der Ventilanordnung und der Aktoranordnung an dieser Aktoranordnung schnell und einfach bei geringem Montageaufwand angeschlossen werden können, so dass fluidische Verbindungen und Sensorverbindungen hergestellt sind.

Diese Aufgabe wird erfindungsgemäß durch eine ventilgesteuerte Aktoranordnung mit den Merkmalen des Anspruchs 1 gelöst.

In vorteilhafter Weise stellen die Anschlussstücke an dem oder den Aktoren automatisch sowohl die fluidische Verbindung als auch die elektrische bzw. optische Verbindung zu den Sensoren her, ohne dass optische oder elektrische Verbindungen gesondert montiert werden müssten. Lediglich die mechanische Verbindung der Kunststoffleitungen über die Anschlussstücke an den Aktoren reicht aus, um alle erforderlichen Verbindungen automatisch herzustellen. Die Gefahr von falschen elektrischen Anschlüssen und Anschlussverwechslungen bei den Sensoren ist dabei ausgeschaltet. Ein Auswechseln von Sensoren ist dabei ebenfalls schnell und einfach möglich. Es können herkömmliche Aktoren, wie Arbeitszylinder, eingesetzt werden, die nicht für anmontierte Ventile angepasst sind, so dass sich die Leitungsführung in den Aktoren vereinfacht.

Durch die in den Unteransprüchen aufgeführten Maßnahmen sind vorteilhafte Weiterbildungen und Verbesserungen der im Anspruch 1 angegebenen ventilgesteuerten Aktoranordnung möglich.

Die Aktoranordnung besitzt zweckmäßigerweise wenigstens einen als Arbeitszylinder ausgebildeten Aktor, wobei der wenigstens eine Sensor als Positionssensor für die Kolbenposition des Arbeitszylinders ausgebildet ist. Bei einer vorteilhaften konstruktiven Ausgestaltung ist dabei die Ventilanordnung über zwei fluidische Kunststoffleitungen mit dem wenigstens einen Arbeitszylinder verbunden. Jedes der beiden Anschlussstücke weist dann einen Positionssensor zur Erfassung der Endlagenpositionen auf.

Eine schnelle und einfache Montage wird auch dadurch unterstützt, wenn die wenigstens eine Kunststoffleitung über ein weiteres Anschlussstück mit der Ventilanordnung verbunden ist, wobei das elektrische und/oder optische Anschlusskabel des Anschlussstücks an die elektronische Steuereinrichtung angeschlossen ist, die vorzugsweise wenigstens teilweise an der Ventilanordnung angebracht ist. Somit werden durch einfaches Einsetzen der wenigstens einen Kunststoffleitung mittels der Anschlussstücke automatisch sowohl die fluidischen als auch die elektrischen bzw. optischen Sensorverbindungen hergestellt, ohne dass fehlerhafte Anschlüsse möglich wären.

In einer vorteilhaften Ausgestaltung besitzt das wenigstens eine Anschlussstück eine Steckaufnahme für die Kunststoffleitung, die mit einer fluidischen Leitung im Anschlussstück verbunden ist und die Kopplungsmittel zur elektrischen und/oder optischen Verbindung mit dem wenigstens einen elektrischen Leitungsstrang und/oder dem Lichtleiter in der Kunststoffleitung besitzt, wobei die Kopplungsmittel mit dem elektrischen und/oder optischen Anschlusskabel am Anschlussstück verbunden sind. Auch diese Anordnung trägt zur Verhinderung von falschen elektrischen Anschlüssen und Anschlussverwechslungen bei den Sensoren bei.

In vorteilhafter Weise ist am Boden der nicht drehsymmetrischen, an den Querschnitt der Kunststoffleitung angepassten Steckaufnahme wenigstens eine elektrische Kontaktspitze als Kopplungsmittel derart angeordnet, dass sie beim Einstecken der Kunststoffleitung in die Steckaufnahme mit dem wenigstens einen elektrischen Leitungsstrang fluchtet und in diesen eindringt. Dadurch können durch einfaches Einstecken der fluidischen Kunststoffleitung in die Steckaufnahme automatisch die elektrischen Anschlüsse selbst dann hergestellt werden, wenn mehrere Leitungsstränge in der Wandung der Kunststoffleitung vorhanden sind. Ein zusätzliches oder nachträgliches Herstellen der elektrischen Verbindungen entfällt vollständig. Da beim Einstecken der Kunststoffleitung in die Steckaufnahme die Kontaktspitzen direkt in die Leitungsstränge eindringen, ist eine sichere elektrische Verbindung gewährleistet, zumal Kontaktspitzen in der Längsrichtung in die Leitungsstränge eindringen und somit eine gegenüber einem Quereinstecken längere Kontaktstrecke bilden.

Alternativ oder zusätzlich kann die Wandung der Kunststoffleitung auch wenigstens einen Lichtleiter aufweisen, wobei dann anstelle der Kontaktspitzen Lichtübertrager oder Lichtwandler am Boden der Steckaufnahme treten. Die beschriebenen Vorteile treten auch bei dieser Ausgestaltung auf.

Die Steckaufnahme besitzt zweckmäßigerweise ein parallel zur Kontaktspitze angeordnetes, beim Einstecken der Kunststoffleitung in deren Fluidkanal eindringendes Rohrstück oder besteht im wesentlichen aus einem solchen. Beim Aufstecken der Kunststoffleitung auf das Rohrstück wird somit zum einen eine dichtende fluidische Verbindung gebildet, und zum anderen dient dieses Rohrstück zur Zentrierung und Ausrichtung der Kunststoffleitung und ermöglicht dadurch eine sichere Positionierung relativ zu der oder den Kontaktspitzen.

Zur mechanischen Fixierung, jedoch auch zur zusätzlichen Abdichtung, dient in vorteilhafter Weise eine Klemmfixierung, die insbesondere als Klemmverschraubung ausgebildet ist. Die Klemmverschraubung besteht dabei in vorteilhafter Weise aus einem die Steckaufnahme umgreifenden Schraubgewinde sowie aus einer entsprechenden Überwurfmutter, wobei ein durch die Überwurfmutter axial entlang einer Schrägfläche bewegbares Keilstück zur Klemmfixierung der Kunststoffleitung vorgesehen ist, insbesondere zur Klemmfixierung zwischen dem Rohrstück und dem Keilstück. Beim Einschrauben der Überwurfmutter erfolgt dadurch nicht nur die gewünschte Klemmfixierung, sondern zusätzlich wird die Kunststoffleitung in die Steckaufnahme hineingedrückt, wodurch sich der elektrische Kontakt zwischen den Kontaktspitzen und den Leitungssträngen durch Verdichtung des Schlauchkabelmaterials verbessert (Kontaktdruck über das Schlauchkabelmaterial).

In einer vorteilhaften Ausführung ist das flexible Keilstück als Klemmring ausgebildet und besitzt eine der Außenkontur der Kunststoffleitung entsprechende Innenkontur, wobei sich der Außendurchmesser keilartig zum Boden der Steckaufnahme hin verjüngt. Hierdurch wird durch die Klemmverschraubung in Verbindung mit geeigneten Dichtungsmitteln gleichzeitig ein wassergeschützter Anschluss gebildet.

Das Anschlussstück ist über eine interne Kanalanordnung fluidisch mit dem fluidischen Aktor oder der Ventilanordnung verbunden, wobei das Anschlussstück vorzugsweise eine fluidische Anschlussverschraubung zum Einschrauben in den Aktor oder in die Ventilanordnung aufweist oder einstückig angeformt ist.

Eine besonders einfache und störungssichere Montage und Anordnung wird dadurch erreicht, dass die Sensoranordnung und das elektrische und/oder optische Anschlusskabel irreversibel miteinander verbunden sind, insbesondere aneinander angeformt sind. Ebenfalls ist das wenigstens eine Anschlusskabel bevorzugt irreversibel am Anschlussstück angeformt, da hierdurch eine wasser- und umweltgeschützte Anordnung erzielt wird. Selbstverständlich kann das Anschlusskabel auch über eine Steck- oder Schraubverbindung mit dem Anschlussstück verbunden werden.

Ein Ausführungsbeispiel der Erfindung ist in der Zeichnung dargestellt und in der nachfolgenden Beschreibung näher erläutert. Es zeigen:
- Fig. 1: ein Anschlussstück mit angeformtem Anschlusskabel und Sensor, bei dem eine fluidische Kunststoffleitung mit drei elektrischen Leitungssträngen in der Wandung aufgesteckt wird, im Längsschnitt,
- Fig. 2: eine Querschnittsdarstellung der fluidischen Kunststoffleitung,
- Fig. 3: das Anschlussstück gemäß Fig. 1 bei vollständig eingesteckter und durch eine Klemmverschraubung fixierter Kunststoffleitung,
- Fig. 4: eine weitere Ausführung eines Anschlussstücks für eine optische Signalübertragung im Längsschnitt und
- Fig. 5: eine schematische Darstellung des Ausführungsbeispiels der Erfindung mit vier Arbeitszylindern als Aktoranordnung.

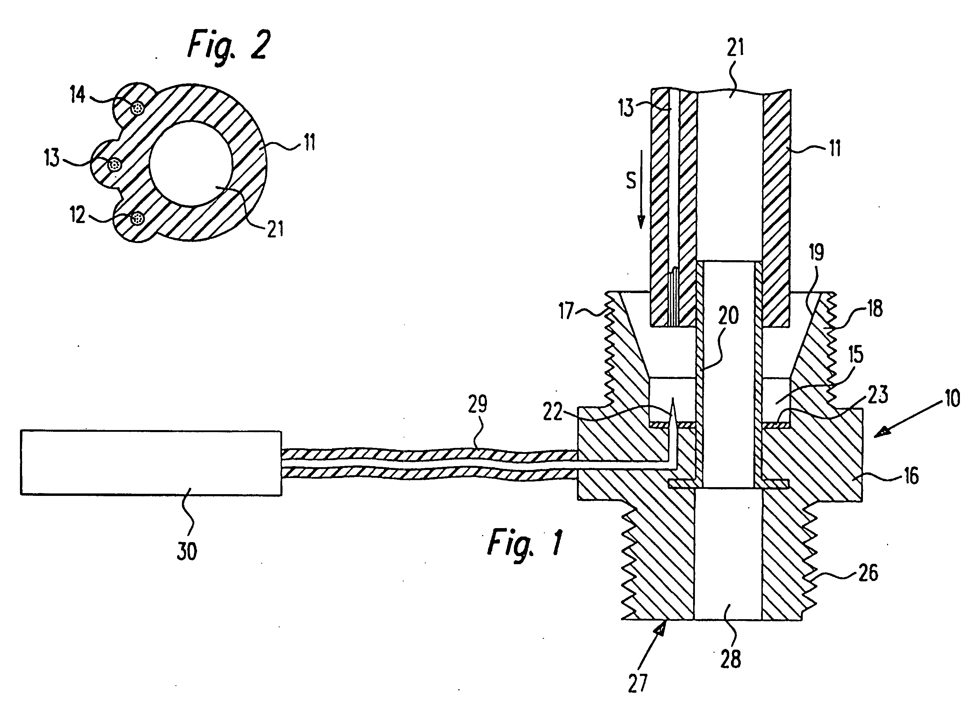

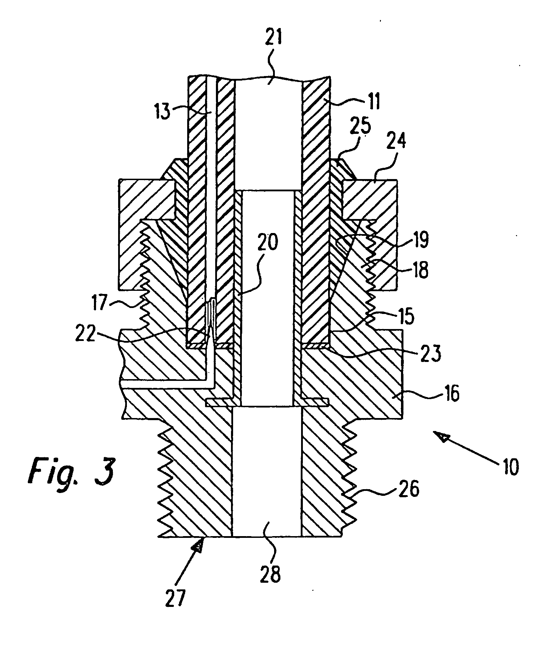

Das in den Fig. 1 und 3 dargestellte Anschlussstück 10 dient im wesentlichen zur Verbindung mit einer flexiblen fluidischen Kunststoffleitung 11, in deren Wandung drei elektrische Leitungsstränge 12 - 14 verlaufen, die beispielsweise als Litzen ausgebildet sind. Die Zahl der Leitungsstränge 12 - 14 ist selbstverständlich beliebig zwischen einem und einer Vielzahl von Leitungssträngen.

Die Kunststoffleitung 11 weist einen nicht drehsymmetrischen Querschnitt auf, so dass ein Einstecken in eine Steckaufnahme 15 mit entsprechendem Querschnitt des Grundkörpers 16 des Anschlussstücks 10 nur in einer bestimmten Ausrichtung möglich ist. Die Steckaufnahme 15 ist dabei von einem rohrartigen, außen ein Schraubgewinde 17 aufweisenden Wandbereich 18 des Grundkörpers 16 umgeben. Ein sich an den Bereich der Steckaufnahme 15 anschließender Teil des Wandbereichs 18 ist zum freien axialen Ende hin verjüngt, so dass an seiner Innenseite eine kreiskegelartige Schrägfläche 19 gebildet wird. Die Steckaufnahme 15 ist radial nach innen durch ein Rohrstück 20 begrenzt, das am bzw. im Grundkörper 16 dichtend verankert oder daran angeformt ist und das sich in axialer Richtung über das freie Ende des Wandbereichs 18 hinaus erstreckt. Der Außendurchmesser des Rohrstücks 20 ist dabei geringfügig größer als der Innendurchmesser eines Fluidikkanals 21 im Innern der Kunststoffleitung 11.

Vom Boden der Steckaufnahme 15 aus erstrecken sich elektrische Kontaktspitzen 22 parallel zum Rohrstück 20 in die Steckaufnahme 15 hinein, wobei die Zahl und Anordnung der Kontaktspitzen 22 der Zahl und Anordnung der Leitungsstränge 12 - 14 in der Kunststoffleitung 11 entspricht, so dass beim Einstecken der Kunststoffleitung 11 in die Steckaufnahme 15 die Kontaktspitzen 22 in die Leitungsstränge 12 - 14 eindringen und eine elektrisch leitende Verbindung herstellen, wie dies in Fig. 3 dargestellt ist. Infolge der Schnittdarstellung ist lediglich die mit dem mittleren Leitungsstrang 13 in Kontakt stehende Kontaktspitze 22 erkennbar. Dabei ist noch eine Dichtscheibe 23 zwischen dem Boden der Steckaufnahme 15 und der Stirnseite der Kunststoffleitung 11 angeordnet.

Zur Fixierung der eingesteckten Kunststoffleitung 11 in der Steckaufnahme 15 dient eine mit dem Schraubgewinde 17 verschraubbare Überwurfmutter 24, durch die ein flexibler elastischer Klemmring 25 nach Art einer Spannzange axial verschiebbar ist. Die Innenkontur dieses Klemmrings 25 entspricht dabei der Außenkontur der Kunststoffleitung 11, während die Außenkontur dieses Klemmrings 25 zumindest im Bereich der kreiskegelartigen Schrägfläche 19 des Wandbereichs 18 komplementär kreiskegelartig ausgebildet ist, so dass beim Einschrauben der Überwurfmutter 24 der Klemmring 25 durch Keilwirkung gegen die Kunststoffleitung 11 gepresst wird und diese zwischen sich und dem Rohrstück 20 festklemmt. Dabei wirkt beim Einschrauben der Überwurfmutter 24 mittels des Klemmrings 25 eine Kraft auf die Kunststoffleitung 11 in der Steckrichtung S, durch die die Kunststoffleitung 11 gegen den Boden der Steckaufnahme 15 und damit gegen die Dichtscheibe 23 gedrückt wird. Gleichzeitig dringen die Kontaktspitzen 22 noch tiefer in die Kunststoffleitung 11 bzw. die Leitungsstränge 12 - 14 ein, sofern sie nicht bereits vollständig beim Einstecken eingedrungen sind. Zusätzlich wird durch das Verpressen des elastischen Materials des Schlauchkabels der Kontaktdruck verstärkt.

Anstelle der beschriebenen Klemmverschraubung können auch andere bekannte Klemm- oder Rastverbindungen oder auch Innenverschraubungen eingesetzt werden. Im einfachsten Falle kann beispielsweise lediglich das Rohrstück 20 an seiner Außenseite und/oder der Wandbereich 18 an seiner Innenseite mit ringartigen Haltevorsprüngen zur Fixierung der eingesteckten Kunststoffleitung 11 versehen sein. Solche Haltevorsprünge können auch zusätzlich beim beschriebenen Anschlussstück eingesetzt werden. Auch die Kontaktspitzen 22 können anders angeordnet sein oder durch andere Kontaktmittel ersetzt werden.

Der axial dem Wandbereich 18 entgegengesetzte Endbereich des Grundkörpers 16 ist als Verschraubung zum dichtenden Einschrauben in ein fluidisches Gerät, wie ein Ventil, einen Arbeitszylinder oder dergleichen, ausgebildet. Hierzu ist dieser rohrartige Verschraubungsbereich 27 mit einem Außengewinde 26 versehen, wobei ein von der Stirnseite bis zum Rohrstück 20 verlaufender Innenkanal 28 die fluidische Verbindung herstellt.

Gemäß Fig. 1 ist umfangsseitig am Grundkörper 16 ein elektrisches Kabel 29 angesetzt oder angeformt, das die elektrische Verbindung zwischen einer Sensoranordnung 30 und den Kontaktspitzen 22 herstellt. Falls die Sensoranordnung 30 zur Signalübertragung nur zwei Leitungen benötigt, so kann das Kabel 29 statt dreiadrig auch zweiadrig ausgebildet sein, so dass eine der Kontaktspitzen 22 nicht angeschlossen ist oder entfällt. Das elektrische Kabel 29 kann dabei sowohl an der Sensoranordnung 30 als auch am Grundkörper 16 dichtend angeformt sein. Eine solche Sensoranordnung dient beispielsweise zur Positionserfassung, zur Druckerfassung oder zur Temperaturerfassung. Dabei enthält die Sensoranordnung 30 für die jeweilige Messwerterfassung bekannte Sensoren, beispielsweise für die Positionserfassung Hall-Elemente oder andere auf magnetische und/oder elektrische Felder ansprechende Sensoren.

Anstelle eines angeformten elektrischen Kabels 29 kann die Anschlussstelle auch als elektrische Steck- oder Schraubverbindung ausgebildet sein. Weiterhin können in einer alternativen Ausgestaltung auch mehrere elektrische Kabel 29 am Grundkörper 16 angesetzt, angeformt oder über mehrere Steck- oder Schraubverbindungen verbunden sein, um beispielsweise mehrere Sensoranordnungen oder sonstige Geräte mit den Leitungssträngen 12 - 14 in der Kunststoffleitung 11 zu verbinden.

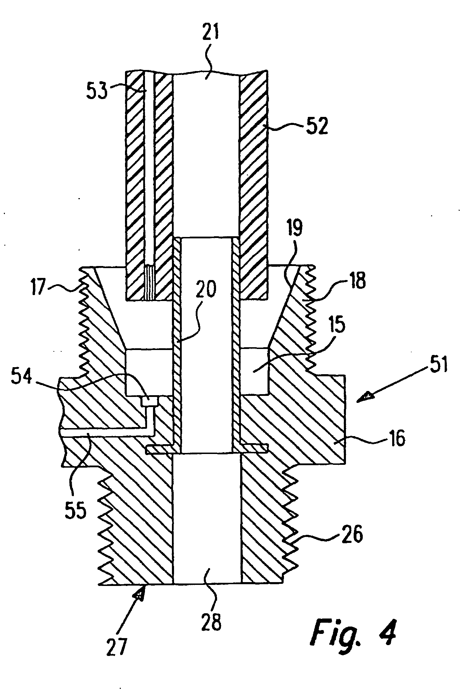

Das in Fig. 4 dargestellte modifizierte Anschlussstück 51 entspricht weitgehend dem in Fig. 1 und 3 beschriebenen Anschlussstück 10, wobei gleiche oder gleichwirkende Bauteile und Bereiche mit denselben Bezugszeichen versehen und nicht nochmals beschrieben sind. Im Unterschied zum Anschlussstück 10 tritt hier eine Kunststoffleitung 52 mit entsprechendem Querschnitt, in deren Wandung anstelle von elektrischen Leitungssträngen 12 - 14 nunmehr Lichtleiter 53 angeordnet sind. Am Boden der Steckaufnahme 15 sind die Kontaktspitzen 22 durch Lichtübertrager 54 ersetzt, die bei eingesteckter Kunststoffleitung 52 in optischen Kontakt mit den Stirnseiten der Lichtleiter 53 gelangen. Die mit den Kontaktspitzen 22 verbundenen, intern im Grundkörper 16 verlaufenden elektrischen Leitungen sind hier durch entsprechend verlaufende interne Lichtleiter 55 ersetzt. Die Wirkungsweise des in Fig. 4 dargestellten Anschlussstücks 51 entspricht grundsätzlich der des Anschlussstücks 10, wobei lediglich die elektrische Signalübertragung durch eine optische Signalübertragung ersetzt ist.

In Abwandlung des Anschlussstücks 51 können in einer einfacheren Ausführung die Lichtübertrager 54 auch entfallen, so dass die Lichtleiter 53 in der Kunststoffleitung 52 direkt in optischen Kontakt mit den internen Lichtleitern 55 gelangen. Alternativ hierzu können die Lichtübertrager 54 auch durch Lichtwandler ersetzt werden, so dass dort optische Signale in elektrische Signale umgewandelt werden und die internen Lichtleiter 55 wiederum durch elektrische Leitungen ersetzt werden können.

Prinzipiell sind auch gemischte Ausführungen denkbar, das heißt, eine Kunststoffleitung kann zum Teil elektrische Leitungsstränge und zum Teil Lichtleiter enthalten, wobei dann in der Steckaufnahme 15 entsprechende Kontaktspitzen und Lichtübertrager bzw. Lichtwandler angeordnet sind. Beispielsweise können ein Lichtleiter für die Signalübertragung und zwei elektrische Leitungsstränge für elektrische Verstärker bzw. zur Stromversorgung vorgesehen sein.

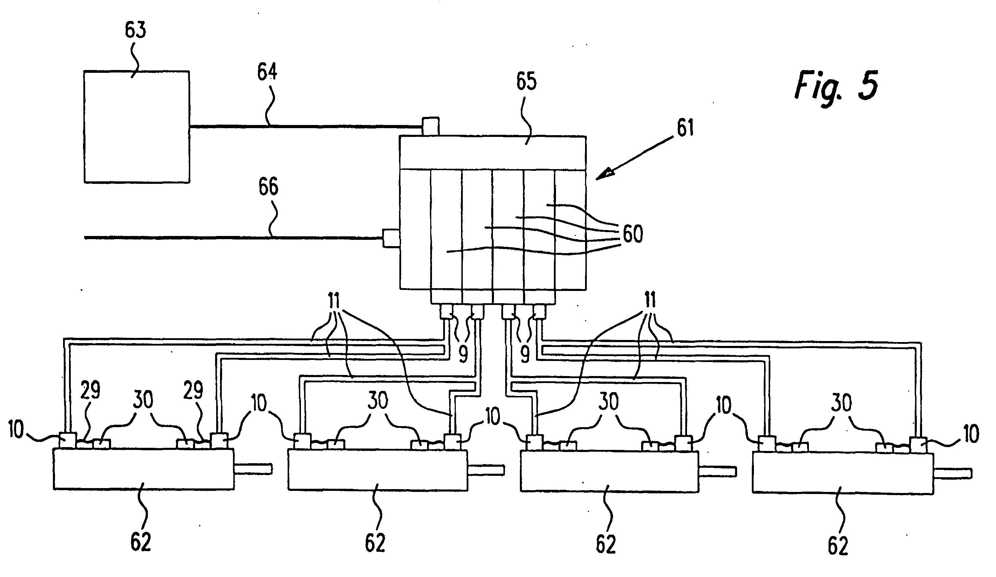

Bei dem in Fig. 5 dargestellten Ausführungsbeispiel der Erfindung sind vier als Plattenventile ausgebildete fluidische Ventile 60 einer Ventilstation 61 über Kunststoffleitungen 11 mit einer Aktoranordnung verbunden, die aus vier Arbeitszylindern 62 besteht. Die Zahl der Ventile 60 und Arbeitszylinder 62 ist selbstverständlich beliebig, wobei auch andere Aktoren vorgesehen sein können, wie Linearmotoren, fluidische Drehantriebe, fluidische Greifer oder dergleichen. Werden die dargestellten doppeltwirkenden Arbeitszylinder 62 durch einfachwirkende ersetzt, so ist selbstverständlich nur jeweils eine Kunststoffleitung 11 erforderlich.

Eine elektronische Steuerung 63, beispielsweise eine Prozessorsteuerung, für die Ventilstation 61 bzw. die Arbeitszylinder 62 ist über eine Busleitung 64 (z. B. ASI-Bus) mit einer Busstation 65 verbunden, die quer zu den Ebenen der plattenartigen Ventile 60 an der Ventilstation 61 angebracht ist, beispielsweise angesteckt ist, und intern über Leitungen bzw. Steckverbindungen mit den Magnetspulen der einzelnen Ventile 60 verbunden ist. Eine fluidische Leitung 66, beispielsweise eine pneumatische Druckleitung, ist zur Druckversorgung der Anordnung mit der Ventilstation 61 verbunden.

Jeder Arbeitszylinder 62 ist über zwei elektropneumatische Kunststoffleitungen 11 mit dem jeweils zugeordneten Ventil 60 verbunden, wobei die Kunststoffleitungen 11 jeweils endseitig mit den Arbeitszylindern 62 über Anschlussstücke 10 und mit den Ventilen 60 über modifizierte Anschlussstücke 9 verbunden sind, die im wesentlichen aus dem Wandbereich 18 und der Steckaufnahme 15 gemäß den Fig. 1 und 3 bestehen und beispielsweise an den Ventilen 60 angesteckt oder angeformt sind, wobei die Kontaktspitzen 22 über interne elektrische Leitungen mit der Ventilstation 61 verbunden sind, um dieser Sensorsignale zuführen zu können. Prinzipiell ist auch die Verwendung eines einschraubbaren Anschlussstücks 10 hier möglich.

Die beiden Kunststoffleitungen 11 für jeden Arbeitszylinder 62 dienen zur Druckbeaufschlagung des nicht dargestellten Kolbens in entgegengesetzter Richtung, um die beiden Bewegungsrichtungen zu erzeugen. Die mit den Anschlussstücken 10 über die elektrischen Kabel 29 verbundenen Sensoren 30 sind als Positionssensoren ausgebildet und werden zur Erfassung der gewünschten Endlagenpositionen oder sonstiger Positionen an den Arbeitszylindern 62 fixiert, wobei bekannte Fixiermittel verwendet werden können. Die Anschlussstücke 10 können auch jeweils mit mehreren Sensoren verbunden sein, beispielsweise mehreren Positionssensoren und/oder Drucksensoren und/oder Temperatursensoren und dergleichen, um die entsprechenden Messgrößen an den Arbeitszylindern 62 zu erfassen. Zur Sensorsignalübertragung ist in den Kunststoffleitungen 11 die erforderliche Zahl von Leitungssträngen 13 vorgesehen.

Selbstverständlich können die Kunststoffleitungen 11 sowie die Anschlussstücke 9 und 10 auch optisch realisiert werden, beispielsweise gemäß Fig. 4. Gemischte Ausführungen sind ebenfalls möglich.

Obwohl in Fig. 5 bei jedem Ventil 60 nur ein Anschlussstück 9 dargestellt ist, sind selbstverständlich für die jeweils zwei Kunststoffleitungen 11 zwei hintereinander angeordnete Anschlussstücke 9 vorhanden. Prinzipiell könnten jedoch auch kombinierte Anschlussstücke eingesetzt werden, die zum Anschluss von zwei fluidischen Leitungen ausgebildet sind.

## Patentansprüche

1. Ventilgesteuerte fluidische Aktoranordnung, mit einer fluidischen, durch eine elektronische Steuereinrichtung (63 - 65) gesteuerten Ventilanordnung (61) zur Steuerung wenigstens eines Aktors (2), und mit wenigstens einer fluidischen, an die Ventilanordung (61) angeschlossenen Kunststoffleitung (11; 52), die elektrische Leitungsstränge (13) und/oder Lichtleiter (53) zur Sensorsignalübertragung besitzt, und die mit wenigstens einem Anschlussstück (10; 51) versehen ist, das über ein Anschlusskabel (29) mit wenigstens einem Sensor (30) im oder am wenigstens einen Aktor (62) verbunden ist,
**dadurch gekennzeichnet, dass** die Ventilanordnung (61) über die wenigstens eine fluidische Kunststoffleitung (11; 52) mit dem wenigstens einem Aktor (62) verbunden ist, wobei die elektrischen Leitungsstränge (13) und/oder Lichtleiter (53) in der wandung der Kunststoffleitung (11; 52) integriert sind,
und dass das am von der Ventilanordnung (61) entfernten Ende der jeweiligen Kunststoffleitung (11; 52) angebrachte Anschlussstück (10; 51) am wenigstens einen Aktor (62) befestigt ist.

2. Ventilgesteuerte Aktoranordnung nach Anspruch 1, **dadurch gekennzeichnet, dass** sie wenigstens einen Arbeitszylinder als Aktor (62) besitzt, und dass der wenigstens eine Sensor (30) als Positionssensor für die Kolbenposition des Arbeitszylinders ausgebildet ist.

3. Ventilgesteuerte Aktoranordnung nach Anspruch 2, **dadurch gekennzeichnet, dass** jeder doppeltwirkende Arbeitszylinder über zwei fluidische Kunststoffleitungen (11; 52) mit der Ventilanordnung (61) verbunden ist.

4. Ventilgesteuerte Aktoranordnung nach einem der vorhergehenden Ansprüche, **dadurch gekennzeichnet, dass** die wenigstens eine Kunststoffleitung (11) über ein weiteres Anschlussstück (9) mit der Ventilanordnung (61) verbunden ist, wobei das elektrische und/oder optische Anschlusskabel des Anschlussstücks (9) an die elektronische Steuereinrichtung (63 - 65) angeschlossen ist, die vorzugsweise wenigstens teilweise an der Ventilanordnung (61) angebracht ist.

5. Ventilgesteuerte Aktoranordnung nach einem der vorhergehenden Ansprüche, **dadurch gekennzeichnet, dass** das wenigstens eine Anschlussstück (9, 10; 51) eine Steckaufnahme (15) für die Kunststoffleitung (11; 52) besitzt, die mit einer fluidischen Leitung (28) im Anschlussstück (9, 10; 51) verbunden ist und die Kopplungsmittel (22; 54) zur elektrischen und/oder optischen Verbindung mit dem wenigstens einen elektrischen Leitungsstrang (12 - 14) und/oder dem Lichtleiter (53) in der Kunststoffleitung (11; 52) besitzt, wobei die Kopplungsmittel (22; 54) mit dem elektrischen und/oder optischen Anschlusskabel (29) am Anschlussstück (9, 10; 51) verbunden sind.

6. Ventilgesteuerte Aktoranordnung nach Anspruch 5, **dadurch gekennzeichnet, dass** am Boden der nicht drehsymmetrischen, an den Querschnitt der Kunststoffleitung (11) angepassten Steckaufnahme (15) wenigstens eine elektrische Kontaktspitze als Kopplungsmittel (22) derart angeordnet ist, dass sie beim Einstecken der Kunststoffleitung (11) in die Steckaufnahme (15) mit dem wenigstens einen elektrischen Leitungsstrang (12 - 14) fluchtet und in diesen eindringt.

7. Ventilgesteuerte Aktoranordnung nach Anspruch 5 oder 6, **dadurch gekennzeichnet, dass** am Boden der nicht drehsymmetrischen, an den Querschnitt der Kunststoffleitung (52) angepassten Steckaufnahme (15) als Kopplungsmittel wenigstens ein Lichtübertrager (54) oder Lichtwandler derart angeordnet ist, dass er beim Einstecken der Kunststoffleitung (52) in die Steckaufnahme (15) mit dem Lichtleiter (53) fluchtet und eine Lichtverbindung herstellt.

8. Ventilgesteuerte Aktoranordnung nach einem Ansprüche 5 bis 7, **dadurch gekennzeichnet, dass** die Steckaufnahme (15) ein in der Steckrichtung (S) ausgerichtetes, beim Einstecken der Kunststoffleitung (11; 52) in deren Fluidikkanal (21) eindringendes Rohrstück (20) besitzt oder im wesentlichen aus einem solchen besteht.

9. Ventilgesteuerte Aktoranordnung nach einem Ansprüche 5 bis 8, **dadurch gekennzeichnet, dass** eine die in die Steckaufnahme (15) eingesteckte Kunststoffleitung (11; 52) haltende Klemmfixierung vorgesehen ist, die insbesondere als Klemmverschraubung ausgebildet ist.

10. Ventilgesteuerte Aktoranordnung nach Anspruch 9, **dadurch gekennzeichnet, dass** ein die Steckaufnahme (15) ringförmig umgreifender Wandbereich (18) mit einem Gewinde (17) und ein entsprechendes Verschraubungselement (24), insbesondere eine Überwurfmutter vorgesehen sind, wobei ein durch das Verschraubungselement (24) axial entlang einer Schräg- oder Kreiskegelfläche bewegbares Keilstück (25) zur Klemmfixierung der Kunststoffleitung (11; 52) vorgesehen ist, insbesondere zur Klemmfixierung zwischen dem Rohrstück (20) und dem Keilstück (25).

11. Ventilgesteuerte Aktoranordnung nach Anspruch 10, **dadurch gekennzeichnet, dass** das flexible Keilstück (25) als Klemmring ausgebildet ist und eine der Außenkontur der Kunststoffleitung (11; 52) entsprechende Innenkontur besitzt, wobei sich der Außendurchmesser keil- oder kreiskegelartig zum Boden der Steckaufnahme (15) hin verjüngt.

12. Ventilgesteuerte Aktoranordnung nach einem der vorhergehenden Ansprüche, **dadurch gekennzeichnet, dass** das Anschlussstück (9, 10; 51) über eine interne Kanalanordnung (28) fluidisch mit dem Aktor (62) oder der Ventilanordnung (61) verbunden ist.

13. Ventilgesteuerte Aktoranordnung nach Anspruch 12, **dadurch gekennzeichnet, dass** das Anschlussstück (9, 10; 51) eine fluidische Anschlussverbindung, insbesondere Anschlussverschraubung (27) zum Befestigen am Aktor (62) oder an der Ventilanordnung (61) aufweist oder einstückig daran angeformt ist.

14. Ventilgesteuerte Aktoranordnung nach einem der vorhergehenden Ansprüche, **dadurch gekennzeichnet, dass** die Sensoranordnung (30) und das elektrische und/oder optische Anschlusskabel (29) irreversibel miteinander verbunden sind, insbesondere aneinander angeformt sind.

15. Ventilgesteuerte Aktoranordnung nach einem der vorhergehenden Ansprüche, **dadurch gekennzeichnet, dass** das wenigstens eine Anschlusskabel (29) irreversibel am Anschlussstück (9, 10; 51) angeformt ist oder mit diesem über eine Steck- oder Schraubverbindung verbunden ist.

16. Ventilgesteuerte Aktoranordnung nach einem der vorhergehenden Ansprüche, **dadurch gekennzeichnet, dass** der wenigstens eine Sensor (30) Mittel zur variablen Fixierung am Aktor (62) besitzt.

## Claims

1. Valve-controlled fluidic actuator assembly with a fluidic valve assembly (61) controlled by an electronic control unit (63 - 65) for the control of at least one actuator (2), and with at least one fluidic plastic line (11; 52) connected to the valve assembly (61), which incorporates strands of electric lines (13) and/or optical fibre wave guides (53) for the transmission of sensor signals, and which is provided with at least one connecting piece (10; 51) connected to at least one sensor (30) in or on the at least one actuator (62) via a connecting cable (29), **characterised in that** the valve assembly (61) is connected to the at least one actuator (62) via the at least one fluidic plastic line (11; 52), the strands of electric lines (13) and/or optical fibre wave guides (53) being integrated into the wall of the plastic line (11; 52), and **in that** the connecting piece (10; 51) mounted on that end of each plastic line (11; 52) which is remote from the valve assembly (61) is attached to the at least one actuator (62).

2. Valve-controlled actuator assembly according to claim 1, **characterised in that** is comprises as least one operating cylinder as an actuator (62), and **in that** the at least one sensor (30) is designed as a position sensor for the piston position of the operating cylinder.

3. Valve-controlled actuator assembly according to claim 2, **characterised in that** each double-acting operating cylinder is connected to the valve assembly (61) via two fluidic plastic lines (11; 52).

4. Valve-controlled actuator assembly according to any of the preceding claims, **characterised in that** the at least one plastic line (11) is connected to the valve assembly (61) via a further connecting piece (9), the electric and/or optical connecting cable of the connecting piece (9) being connected to the electronic control unit (63 - 65), which is preferably at least partially mounted on the valve assembly (61).

5. Valve-controlled actuator assembly according to any of the preceding claims, **characterised in that** the at least one connecting piece (9, 10; 51) incorporates a plug-in receptacle (15) for the plastic line (11; 52), which is connected to a fluidic line (28) in the connecting piece (9, 10; 51) and which is fitted with coupling means (22; 54) for electric and/or optical connection to the at least one strand of electric lines (12 - 14) and/or the optical fibre wave guide (53) in the plastic line (11; 52), said coupling means (22; 54) being connected to the electric and/or optical connecting cable (29) on the connecting piece (9, 10; 51).

6. Valve-controlled actuator assembly according to claim 5, **characterised in that** at least one electric contact tip is so arranged as coupling means (22) on the base of the plug-in receptacle (15), which is not rotationally symmetrical and is matched to the cross-section of the plastic line (11), that it is flush with and enters into the at least one strand of electric lines (12 - 14) when the plastic line (11) is inserted into the plug-in receptacle (15).

7. Valve-controlled actuator assembly according to claim 5 or 6, **characterised in that** at least one light transmitter (54) or light converter is so arranged as coupling means on the base of the plug-in receptacle (15), which is not rotationally symmetrical and is matched to the cross-section of the plastic line (52), that it is flush with the optical fibre wave guide (53) and establishes an optical connection when the plastic line (52) is inserted into the plug-in receptacle (15).

8. Valve-controlled actuator assembly according to any of claims 5 to 7, **characterised in that** the plug-in receptacle (15) incorporates or substantially consists of a tube section (20) oriented in the plug-in direction (S) and entering the fluid passage (21) when the plastic line (11; 52) is inserted.

9. Valve-controlled actuator assembly according to any of claims 5 to 8, **characterised in that** a clamping device designed in particular as a clamp-type fitting is provided to retain the plastic line (11; 52) inserted into the plug-in receptacle (15).

10. Valve-controlled actuator assembly according to claim 9, **characterised in that** a wall area (18) with a thread (17) surrounding the plug-in receptacle (15) in the manner of a ring and a corresponding fitting element (24), in particular a union nut, are provided, a wedge piece (25) axially movable through the fitting element (24) along an oblique or circular conical surface being provided for clamping the plastic line (11; 52), in particular for clamping between the tube section (20) and the wedge piece (25).

11. Valve-controlled actuator assembly according to claim 10, **characterised in that** the flexible wedge piece (25) is designed as a clamping ring and has an internal contour matching the external contour of the plastic line (11; 52), the external diameter tapering in a wedge or circular cone formation towards the base of the plug-in receptacle (15).

12. Valve-controlled actuator assembly according to any of the preceding claims, **characterised in that** the connecting piece (9, 10; 51) is fluid-connected to the actuator (62) or the valve assembly (61) via an internal passage arrangement (28).

13. Valve-controlled actuator assembly according to claim 12, **characterised in that** the connecting piece (9, 10; 51) has a fluidic connection, in particular a port fitting (27), for mounting on the actuator (62) or the valve assembly (61) or is designed integral therewith.

14. Valve-controlled actuator assembly according to any of the preceding claims, **characterised in that** the sensor assembly (30) and the electric and/or optical connecting cable (29) are permanently connected to one another, in particular integrated with one another.

15. Valve-controlled actuator assembly according to any of the preceding claims, **characterised in that** the at least one connecting cable (29) is permanently integrated with the connecting piece (9, 10; 51) or connected thereto by a plug-in or threaded connection.

16. Valve-controlled actuator assembly according to any of the preceding claims, **characterised in that** the at least one sensor (30) is provided with means for its variable location on the actuator (62).

## Revendications

1. Ensemble actionneur fluidique commandé par soupape, comprenant un ensemble de soupape (61) fluidique, commandé par un dispositif de commande (63-65) électronique pour la commande d'au moins un actionneur (2), et comprenant au moins une conduite en plastique (11 ; 52) fluidique et raccordée à l'ensemble de soupape (61), qui présente des faisceaux de ligne (13) électriques et/ou des conducteurs optiques (53) pour la transmission du signal de capteur, et qui est doté d'au moins une pièce de raccordement (10 ; 51), laquelle est reliée au moyen d'un câble de raccordement (29) à au moins un capteur (30) dans ou sur au moins un actionneur (62), **caractérisé en ce que** l'ensemble de soupape (61) est relié au moyen de ladite au moins une conduite en plastique (11 ; 52) fluidique audit au moins un actionneur (62), les faisceaux de ligne (13) électriques et/ou les conducteurs optiques (53) étant intégrés dans la paroi de la conduite plastique (11 ; 52) et **en ce que** la pièce de raccordement (10 ; 51) placée sur l'extrémité, éloignée de l'ensemble de soupape (61), de la conduite plastique (11 ; 52) respective est fixée sur au moins un actionneur (62).

2. Ensemble actionneur commandé par soupape selon la revendication 1, **caractérisé en ce qu'**il présente au moins un cylindre de travail comme actionneur (62), et **en ce que** ledit au moins un capteur (29) est conçu comme un capteur de position pour la position de piston du cylindre de travail.

3. Ensemble actionneur commandé par soupape selon la revendication 2, **caractérisé en ce que** chaque cylindre de travail à double effet est relié au moyen de deux conduites plastique (11 ; 52) fluidiques à l'ensemble de soupape (61).

4. Ensemble actionneur commandé par soupape selon l'une quelconque des revendications précédentes, **caractérisé en ce que** la au moins une conduite plastique (11) est reliée au moyen d'une autre pièce de raccordement (9) à l'ensemble de soupape (61), le câble de raccordement électrique et/ou optique de la pièce de raccordement (9) étant raccordé au dispositif de commande (63-65) électronique, qui est placé de préférence au moins partiellement sur l'ensemble de soupape (61).

5. Ensemble actionneur commandé par soupape selon l'une quelconque des revendications précédentes, **caractérisé en ce que** la au moins une pièce de raccordement (9, 10; 51) présente un logement femelle (15) pour la conduite plastique (11 ; 52), qui est reliée à une conduite (28) fluidique dans la pièce de raccordement (9, 10 ; 51) et qui présente des moyens d'accouplement (22 ; 54) pour la liaison électrique et/ou optique avec le au moins un faisceau de ligne (12-14) électrique et/ou le conducteur optique (53) dans la conduite plastique (11 ; 52), les moyens d'accouplement (22 ; 54) étant reliés au câble de raccordement (29) électrique et/ou optique sur la pièce de raccordement (9, 10 ; 51).

6. Ensemble actionneur commandé par soupape selon la revendication 5, **caractérisé en ce que** sur le fond du logement femelle (15) non symétrique en rotation, adapté à la section de la conduite plastique (11), est disposée au moins une pointe de contact électrique comme moyen d'accouplement (22) de telle sorte qu'elle est alignée, lors de l'emboîtement de la conduite plastique (11) dans le logement femelle (15) avec le au moins un faisceau de ligne (12-14) électrique et pénètre dans celui-ci.

7. Ensemble actionneur commandé par soupape selon la revendication 5 ou 6, **caractérisé en ce que** sur le fond du logement femelle (15) non symétrique en rotation, adapté à la section de la conduite plastique (52), est disposé comme moyen d'accouplement au moins un transmetteur de lumière (54) ou un convertisseur de lumière de telle sorte que lors l'emboîtement de la conduite plastique (52) dans le logement femelle (15), il est aligné avec le conducteur optique (53) et établit une liaison de lumière.

8. Ensemble actionneur commandé par soupape selon l'une quelconque des revendications 5 à 7, **caractérisé en ce que** le logement femelle (15) présente une pièce tubulaire (20) orientée dans le sens d'emboîtement (S), pénétrant lors de l'emboîtement de la conduite plastique (11 ; 52) dans son canal fluidique (21) ou comprend essentiellement une telle pièce.

9. Ensemble actionneur commandé par soupape selon l'une quelconque des revendications 5 à 8, **caractérisé en ce qu'**il est prévu une fixation par serrage maintenant la conduite plastique (11 ; 52) emboîtée dans le logement femelle (15), qui est conçue en particulier comme un raccord vissé avec serrage.

10. Ensemble actionneur commandé par soupape selon la revendication 9, **caractérisé en ce qu'**une zone de paroi (18) entourant le logement femelle (15) à la façon d'une bague avec un filetage (17) et un élément d'assemblage vissé (24) approprié, en particulier un écrou-raccord, sont prévus, une pièce en forme de clavette (25) déplaçable à travers l'élément de raccord vissé (24) axialement le long d'une surface conique inclinée ou d'une surface conique circulaire pour la fixation par serrage de la conduite plastique (11 ; 52) étant prévue, en particulier pour la fixation par serrage entre la pièce tubulaire (20) et la pièce en forme de clavette (25).

11. Ensemble actionneur commandé par soupape selon la revendication 10, **caractérisé en ce que** la pièce en forme de clavette (25) flexible est conçue comme bague de serrage et présente un contour intérieur correspondant au contour extérieur de la conduite en plastique (11 ; 52), le diamètre extérieur se rétrécissant à la façon d'une clavette ou d'un cône circulaire en direction du fond du logement femelle (15).

12. Ensemble actionneur commandé par soupape selon l'une quelconque des revendications précédentes, **caractérisé en ce que** la pièce de raccordement (9, 10 ; 51) est reliée au moyen d'un agencement de canal (28) interne de façon fluidique à l'actionneur (62) ou à l'ensemble de soupape (61).

13. Ensemble actionneur commandé par soupape selon la revendication 12, **caractérisé en ce que** la pièce de raccordement (9, 10 ; 51) présente une liaison de raccordement fluidique, en particulier un raccord vissé de raccordement (27) pour la fixation sur l'actionneur (62) ou sur l'ensemble de soupape (61) ou est formée d'une seule pièce dessus.

14. Ensemble actionneur commandé par soupape selon l'une quelconque des revendications précédentes, **caractérisé en ce que** l'ensemble capteur (30) et le câble de raccordement (29) électrique et/ou optique sont reliés entre eux de façon irréversible, en particulier sont formés l'un sur l'autre.

15. Ensemble actionneur commandé par soupape selon l'une quelconque des revendications précédentes, **caractérisé en ce que** le au moins un câble de raccordement (29) est formé de façon irréversible sur la pièce de raccordement (9, 10 ; 51) ou est relié à celle-ci au moyen d'un raccord par emboîtement ou d'un raccord à vis.

16. Ensemble actionneur commandé par soupape selon l'une quelconque des revendications précédentes, **caractérisé en ce que** le au moins un capteur (30) présente des moyens pour la fixation variable sur l'actionneur (62).
